# EUROPEAN PATENT SPECIFICATION

(11) **EP 3 552 929 B1**
(45) Date of publication and mention of the grant of the patent: **25.08.2021**
(21) Application number: 18167360.9
(22) Date of filing: 13.04.2018
(51) Int. Cl.: B62D 25/14

(54) **MOTOR VEHICLE PROVIDED WITH A SUPPORT CROSSPIECE, IN PARTICULAR FOR THE SUPPORT OF A DASHBOARD, AND METHOD FOR CONFIGURING A SUPPORT CROSSPIECE IN DIFFERENT MODELS OF MOTOR VEHICLE**
KRAFTFAHRZEUG MIT EINER TRÄGERKREUZVERSTREBUNG, INSBESONDERE ZUM TRAGEN EINES ARMATURENBRETTS, UND VERFAHREN ZUM KONFIGURIEREN EINER TRÄGERKREUZVERSTREBUNG IN VERSCHIEDENEN KRAFTFAHRZEUGMODELLEN
VÉHICULE AUTOMOBILE POURVU D'UNE TRAVERSE DE SUPPORT, EN PARTICULIER POUR LE SUPPORT D'UN TABLEAU DE BORD, ET PROCÉDÉ PERMETTANT DE CONFIGURER UN SUPPORT TRAVERSE DANS DIFFÉRENTS MODÈLES DE VÉHICULE AUTOMOBILE

(43) Date of publication of application: 16.10.2019
(73) Proprietor: FCA Italy S.p.A., 10135 Torino (IT)
(72) Inventor: COLOMBATTO, Andrea, 10135 TORINO (IT); DE SANTIS, Antonio, 10135 TORINO (IT); IAMMARINO, Michele, 10135 TORINO (IT)
(74) Representative: Lovino, Paolo

(56) References cited:
- FR-A1- 2 859 446
- US-A1- 2002 030 386
- US-A1- 2004 262 954

## Description

The present invention relates to a motor vehicle provided with a support crosspiece, in particular for supporting a dashboard provided in the passenger compartment of the motor vehicle.

Generally, in the automotive field, the need is felt to design the components so that they can be used on different models with an as limited as possible number of modifications or differences between one model and another. Regarding specifically the support of the instrument panel or dashboard in the passenger compartment, the need is felt to provide modular components having such characteristics that they can be installed on models provided with an electric drive, where the stresses causing vibrations and noise, especially on the steering wheel, are more contained, but also on models provided with an internal combustion engine, where the stresses causing vibrations and noise tend to be higher.

FR2859446 discloses a crossbeam, having a longitudinal tube and struts placed on a left section of the crossbeam so as to form a reinforced section and to assemble a steering column on the crossbeam.

It is an object of the present invention to provide a motor vehicle provided with a support crosspiece, in particular for supporting a dashboard, which allows meeting simply and inexpensively the abovementioned requirement.

According to the present invention, a motor vehicle is provided with a support crosspiece, in particular for supporting a dashboard, as defined in claim 1.

The invention will now be described with reference to the accompanying drawings showing a non-limiting embodiment, in which:
- Figure 1 shows, partially and in perspective, a preferred embodiment of the motor vehicle provided with a support crosspiece, in particular for supporting a dashboard, according to the present invention;
- Figure 2 shows, on an enlarged and exploded scale, a part of the support crosspiece of Figure 1;
- Figures 3 and 4 are cross sections taken along respective section planes III-III and IV-IV of Figure 1 and show, on an enlarged scale, the crosspiece part visible in Figure 2;
- Figures 5 and 6 are respectively similar to Figures 2 and 4 and refer to a first variant of the support crosspiece of Figure 1;
- Figures 7, 8 and 9 are respectively similar to Figures 2, 3 and 4 and show a second variant of the support crosspiece of Figure 1;
- Figures 10 and 11 are respectively similar to Figures 2 and 3 and show a third variant of the support crosspiece of Figure 1;
- Figure 12 is similar to Figure 11 and shows a fourth variant of the support crosspiece of Figure 1; and
- Figure 13 is similar to Figure 1 and shows a different model of a motor vehicle provided with a support crosspiece, which can be configured to obtain the crosspiece of the motor vehicle of Figure 1.

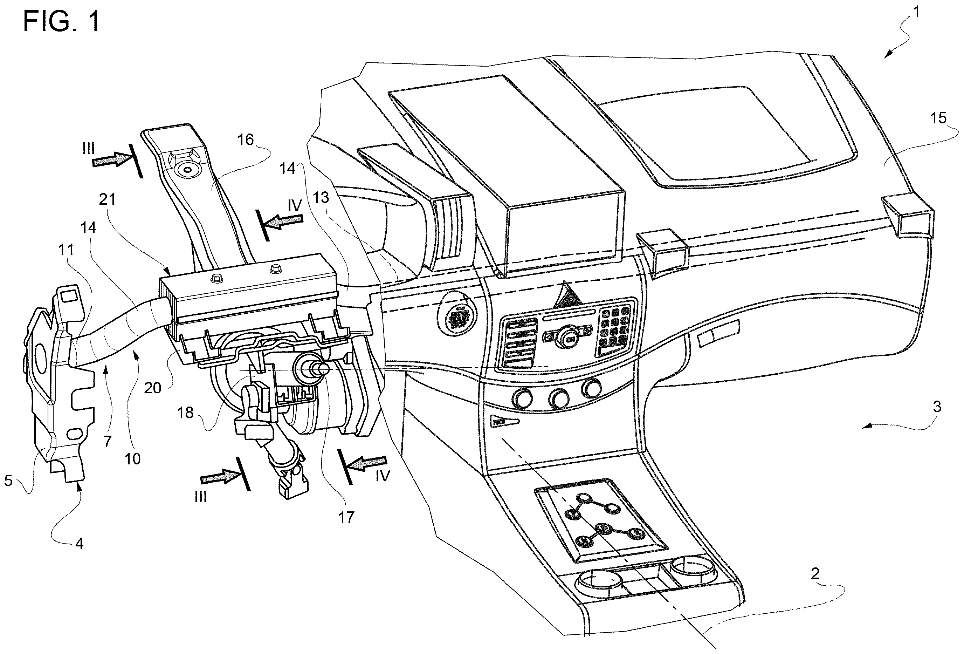

In Figure 1, the reference number 1 indicates, as a whole, a motor vehicle (partially shown) that extends along a longitudinal direction 2 and comprises a passenger compartment 3 and a support structure 4 (partially shown) at least partially made of metallic material and comprising, in turn, two side elements 5 (only one of which is partially shown) and a support crosspiece 7.

The crosspiece 7 is arranged behind a substantially vertical wall (not shown), which is commonly referred to as "firewall" and separates the passenger compartment 3 from a front engine compartment (not shown) of the motor vehicle 1. Hereinafter it is specified that the terms "front", "rear", "side", etc. are used with reference to the normal way of travel of the motor vehicle 1 along the direction 3.

The crosspiece 7 extends horizontally and orthogonally to the direction 3 and comprises a preferably tubular beam 10 having two ends 11, which are opposite to each other and are respectively fastened to the side elements 5. The beam 10, in the specific example, is not rectilinear. In particular, the beam 10 is shaped so as to comprise a plurality of rectilinear portions 13 and a plurality of curved connecting portions 14 between the portions 13. In particular, the portions 13 are horizontal, parallel to each other and orthogonal to the direction 3. Advantageously, the cross sections of the beam 10 have a constant area along the entire length of the beam 10.

The motor vehicle 1 further comprises a dashboard 15 (partially shown), which is arranged in a front area of the passenger compartment 3, above the crosspiece 7 and below a windscreen (not shown), and is supported by the crosspiece 7 in a fixed relative position, in a known manner and not described in detail, e.g. by means of brackets 16 (only one of which is visible in Figure 1).

The motor vehicle 1 also comprises a steering column 17, which is arranged at a driver station in the passenger compartment 3, extends through the "firewall" in a manner not shown, can be actuated by means of a non-shown steering wheel to control the steering of the front wheels of the motor vehicle 1 and is supported by the crosspiece 7 in a fixed relative position or in an height-adjustable position. In particular, the steering column 17 is rotatably coupled to a support structure 18, which, in turn, is coupled to the crosspiece 7 by means of one or more brackets 20.

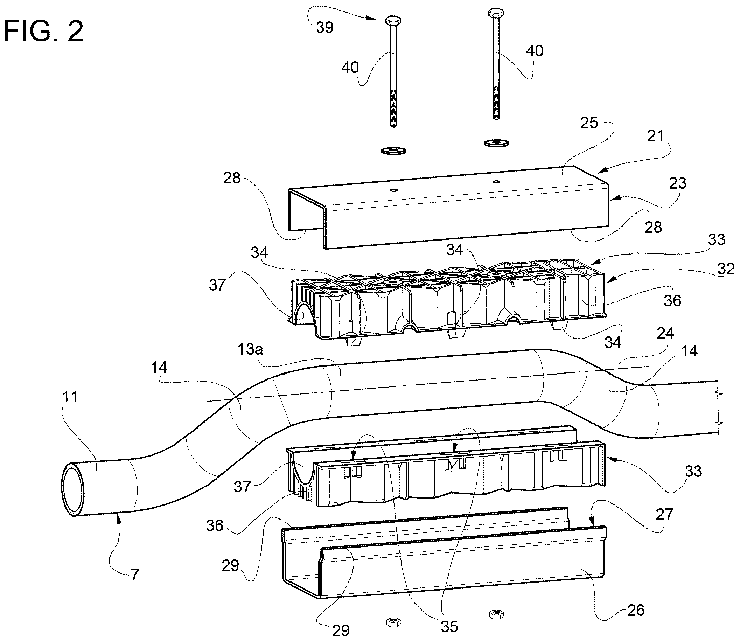

According to an aspect of the present invention, as also shown in Figure 2, the crosspiece 7 comprises a stiffening structure 21, which is arranged in a fixed position on an intermediate portion 13a of the beam 10. Preferably, the structure 21 is mounted at the structure 18, which supports the steering column 17. In particular, the brackets 20 are directly fastened to the structure 21 in a manner not shown in detail, for example by welding.

The structure 21 comprises an outer casing 23, which is coaxial with the portion 13a along an axis 24 and completely surrounds the portion 13a, i.e. defines a closed cross-section around the portion 13a. Preferably, the casing 23 is radially spaced in its entirety from the portion 13a.

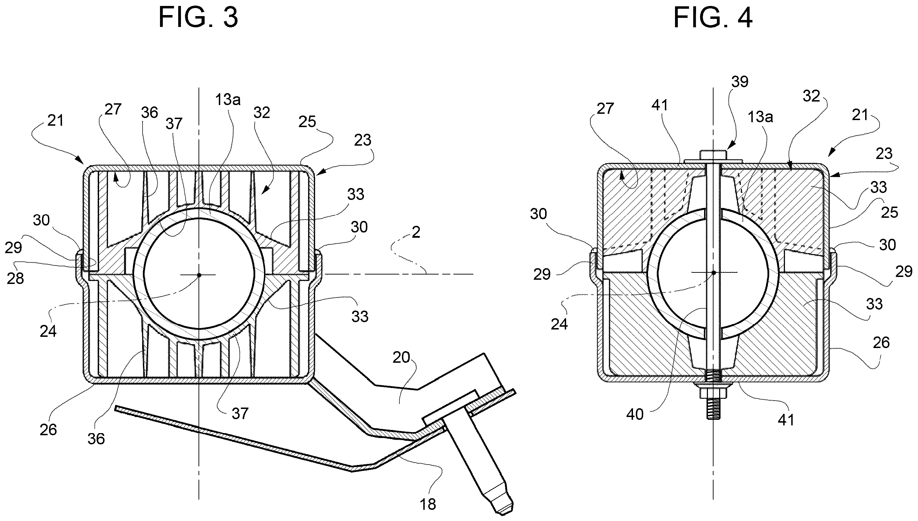

Advantageously, the casing 23 is defined by two half-shells 25, 26 which are diametrically opposite to each other, are fixed to each other and/or to the portion 13a, and have respective C-shaped cross-sections whose concavities are radially oriented towards the portion 13a to define a chamber 27 axially crossed by the portion 13a. The half-shells 25, 26 have respective pairs of end edges 28, 29, wherein the edges 28 of the half-shell 25 are coupled to the edges 29 of the half-shell 26. Preferably, damping elements 30 (Figure 3) made of rubber, elastomeric material or other material suitable for damping the vibrations are provided at the edges 28 and/or 29.

The structure 21 further comprises a separating and reinforcing core 32, arranged in the chamber 27 between the portion 13a and the casing 23 and made of a plastic or metallic material. In the specific example shown, the core 32 is constituted by two diametrically opposite bodies 33, the one housed in the half-shell 25 and the other housed in the half-shell 26. In particular, one of the bodies 33 comprises a plurality of protruding flaps 34, while the other comprises a plurality of seats 35 respectively engaged by the flaps 34. More in detail, as shown in Figures 3 and 4, the bodies 33 are supported and fastened to each other and to the inner surfaces of the half-shells 25 and 26.

Advantageously, each of the bodies 33 comprises a portion 36 having an alveolar and/or lamellar and/or porous structure, which allows a good compromise between rigidity and lightness of the structure 21. Moreover, preferably each of the bodies 33 comprises a wall 37 having a complementary shape with respect to the one of the portion 13a, e.g. a semi-cylindrical shape, which is radially supported by and fastened to the outer surface of the portion 13a and carries the corresponding portion 36.

With reference to Figures 2 and 4, the structure 21 further comprises a connecting device 39, which clamps the casing 23 and the core 32 and, preferably, radially tightens the bodies 33 between the portion 13a and the half-shells 25, 26. For example, the device 39 comprises two or more tie rods or bolts 40, which radially cross the bodies 33, the portion 13a and the half-shells 25,26 and are clamped against an intermediate portion 41 of the half-shells 25, 26, in particular through the interposition of rosettes and/or through other anti-unscrewing devices.

Other damping elements, made of rubber, elastomeric material or any other vibration damping material, could be arranged at the coupling zones between the two bodies 33 and/or at the coupling zones between the bodies 33 and the half-shells 25, 26.

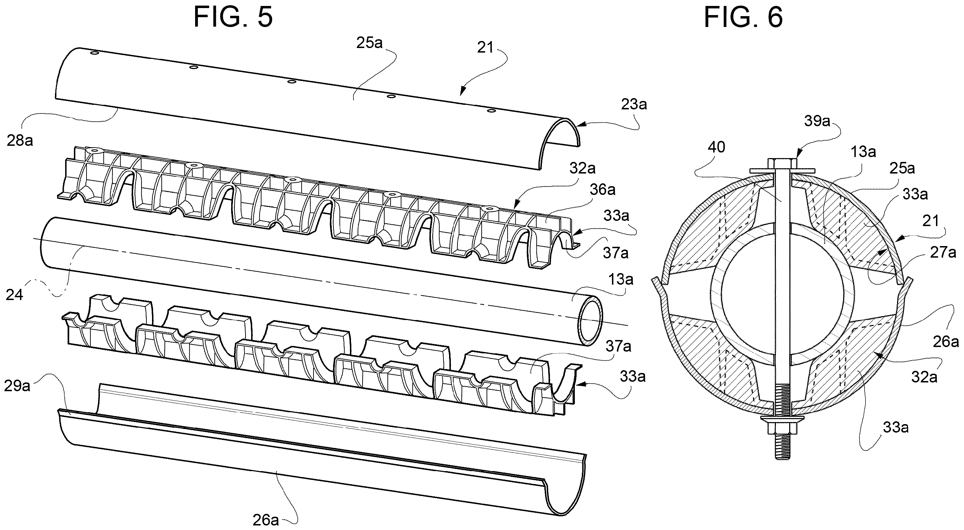

In Figures 2 to 4, the overall outer shape of the structure 21 is a prism having a quadrangular section. In the variant of Figures 5 and 6, on the other hand, the outer shape of the structure 21 is cylindrical, with a circular or elliptical section. Where possible, the parts forming this embodiment are indicated by the same reference numbers used in Figures 2 and 4 followed by the reference letter a.

With respect to what shown in Figures 2 to 4, the bodies 33a are free of the flaps 34 and of the seats 35 and, in particular, are spaced from one another, but are still radially clamped against the outer surface of the portion 13a.

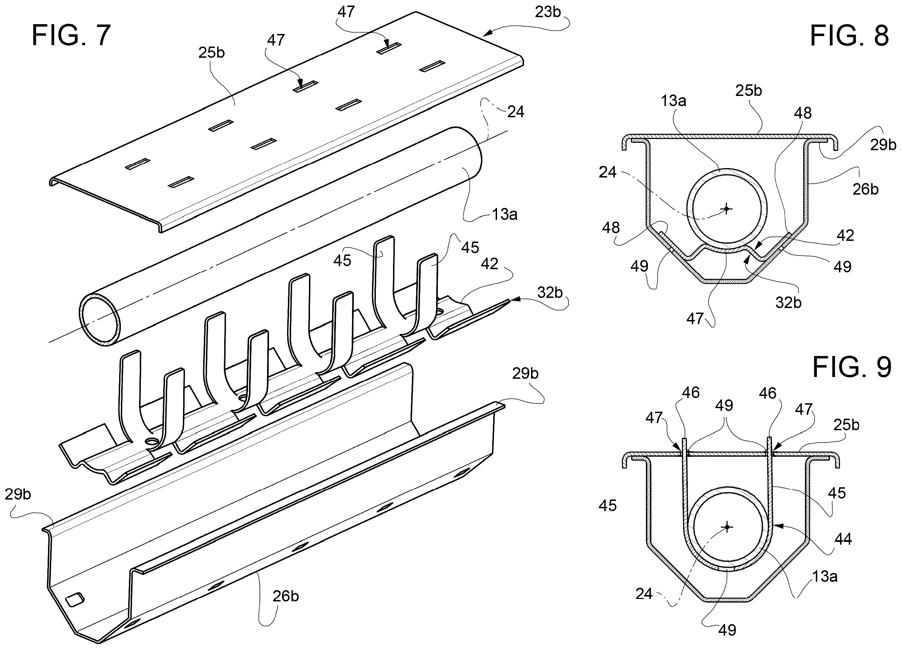

Figures 7 to 9 show a further variant of the structure 21, whose parts are indicated, where possible, by the same reference numbers used in Figures 2 and 4 followed by the reference letter b.

The casing 23b consists of a plate 25b and of a half-shell 26b, whose edges 29b rest on the plate 25b.

The core comprises a shaped sheet or plate 32b, which in turn comprises at least a separating and reinforcing portion 42 (Figure 8), radially clamped between the portion 13a and the half-shell 26b, and at least a U-shaped connecting portion 44 (Figure 9) fitted on the portion 13a so as to have two arms 45 arranged on opposite sides of the portion 13a. The arms 45 end with respective feet 46 engaging respective seats 47 made in the plate 25b and are fastened in a non-shown manner to the plate 25b (e.g. by welding or by bending or by riveting the feet 46).

In particular, the sheet 32b comprises a plurality of portions 42 and a plurality of portions 44 alternating along the axis 24.

With reference to Figure 8, the portions 44 are defined by respective walls folded so that each of them has an intermediate portion 47 resting on the outer surface of the portion 13a, and a pair of wings 48 projecting from opposite ends of the portion 47 and resting on the inner surface of the half-shell 26b.

The flexibility of the sheet 32b helps dampening the vibrations. In particular, the sheet 32b is obtained from a single flat plate by means of shearing and bending operations.

Preferably, the half-shell 26b is fastened to the plate 25b by welding.

Advantageously, damping elements 49, made of rubber, elastomeric material or any other vibration damping material, are arranged at the coupling zones between the portions 44 and 13a, and/or at the coupling zones between the feet 46 and the plate 25b, and/or at the coupling zones between the wings 48 and the half-shell 26b.

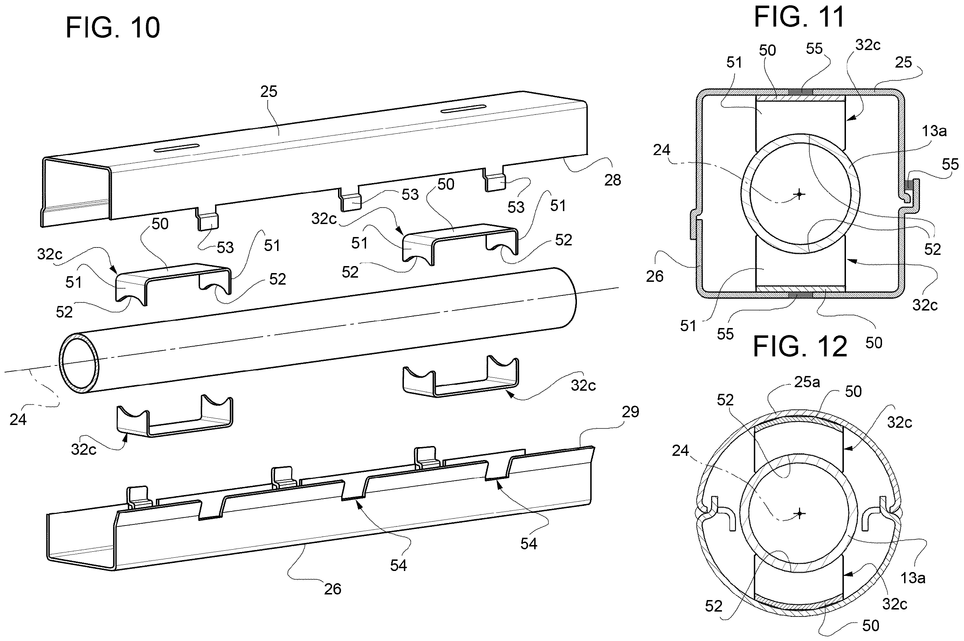

Figures 10 and 11 show a further variant of the structure 21, in which the core is constituted by a plurality of bridge-shaped or C-shaped plates 32c so that each has an intermediate wall 50 coupled to the inner surface of the half-shells 25, 26 and two appendices 51, which radially project from the ends of the wall 50 and have respective edges 52, which are coupled to the outer surface of the portion 13a. In particular, the edges 52 have a concave profile complementary to the shape of the portion 13a. In particular, the plates 32c are arranged in pairs, axially spaced apart from one another, and the plates 32c of each pair are diametrically opposite to one another.

Moreover, in the specific example shown, the edges 28 of the half-shell 25 and the edges 29 of the half-shell 26 are not rectilinear, but have a plurality of matching teeth 53 and/or seats 54.

Damping elements 55, made of rubber, elastomeric material or any other vibration damping material, are arranged at the coupling zones between the edges 28, 29, and/or at the coupling zones between the walls 50 and the half-shells 25, 26, and/or at the coupling zones between the appendices 51 and the portion 13a.

Figure 12 relates to a further variant, which differs from what shown in Figure 11 for the curved outer profile of the casing 23 and of the walls 50.

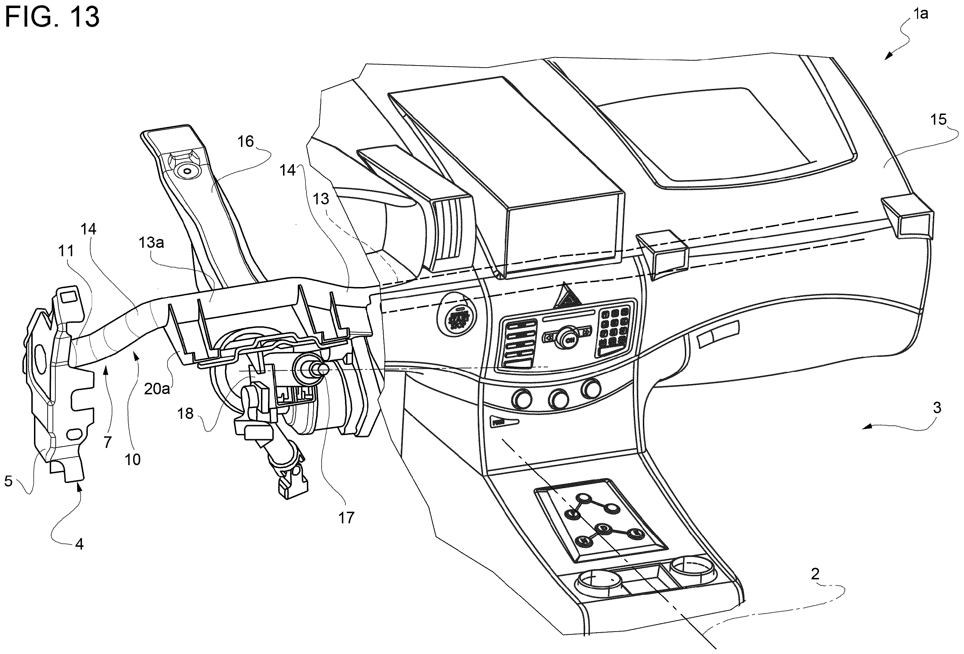

Figure 13 shows a motor vehicle 1a provided with a support crosspiece differing from the crosspiece 7 in that it lacks the structure 21, i.e. it is defined by the beam 10. At the same time, the main components provided in the passenger compartment (dashboard 15, steering column 17 and support structure 18, airbags, etc.) are like those provided on the motor vehicle 1. Only the connecting devices are adapted to couple these components to the beam 10, without the structure 21. For example, the brackets 20 are replaced by brackets 20a, which are fastened directly to the portion 13a of the beam 10.

In particular, the motor vehicle 1 is provided with an internal combustion engine for drive, while the motor vehicle 1a is electric, so that the interior of the passenger compartment is subjected to lower vibrations and noise if compared to the motor vehicle 1. To counteract these vibrations, in particularly on the steering wheel, the rigidity of the beam 10 is sufficient in the motor vehicle 1a, whereas in the motor vehicle 1 the structure 21 is added to increase rigidity. In this way, the greater vibrations induced by the combustion engine are counteracted also in the vehicle 1.

During the manufacturing process, the beam 10 is installed on both the motor vehicles 1 and 1a, while the structure 21 is installed only on the motor vehicle 1 to obtain the required rigidity. It is therefore relatively simple to produce and install the support crosspiece, since the latter has a modular structure, i.e. it has the same beam 10 in both motor vehicle models.

Moreover, the structure 21 is relatively simple to assemble and is relatively compact, so that it does not hinder the installation and the possible height adjustment of the support structure 18 with the steering column 17. It is then clear that the addition of the structure 21 requires modifications only to the connecting devices (brackets) provided for fastening the components to the beam 10. Furthermore, the structure 21 allows obtaining an excellent compromise between rigidity and lightness, in particular thanks to an appropriate design of the core 32.

At the same time, the elements made of damping material contribute to reducing the vibrations that would be transmitted from the portion 13a to the structure 18.

From the foregoing, it is therefore clear that the described vehicle 1 can undergo modifications, which are not outside the scope of the present invention as defined in the appended claims.

For example, the structure 21 could have different dimensions and/or proportions and/or could be mounted on a different part of the beam 10 (e.g. it could also cover the end 11) with respect to what shown by way of example in the attached figures. Furthermore, the crosspiece 7 could have two or more structures 21 mounted on different portions of the beam 10.

Furthermore, the casing 23 could be replaced by a different structure having however a section that embraces or at least partially surrounds the core 32 and the beam 10. For example, the casing 23 could be replaced by several annular or boxed elements tightened around the core 32 and distributed along the axis 24.

## Claims

1. Motor vehicle (1) comprising a support crosspiece (7), which comprises a beam (10) and a stiffening structure (21) coupled to an intermediate portion of said beam (10); said intermediate portion extending along an axis (24); said stiffening structure (21) comprising:
- a casing (23), which at least partially surrounds said intermediate portion (13a);
- a core (32), radially arranged between said intermediate portion (13a) and said casing (23);
- connecting means holding said casing and said core in fixed positions with respect to said intermediate portion (13a) ;
**characterized in that** said stiffening structure (21) comprises damping elements, made of a vibration damping material, arranged at coupling zones between said core (32) and said casing (23) and/or at coupling zones between said core (32) and said intermediate portion (13a).

2. The motor vehicle according to any one of the preceding claims, **characterized in that** said casing (23) completely surrounds said intermediate portion (13a).

3. The motor vehicle according to any one of the preceding claims, **characterized in that** said casing (23) is radially spaced from said intermediate portion (13a).

4. The motor vehicle according to claim 3, **characterized in that** said casing (23) comprises at least one half-shell (25, 26; 25a, 26a; 26b) whose concavity is radially oriented towards said intermediate portion so as to define a cavity (27), which at least partially houses said core (32) and is axially crossed by said intermediate portion (13a).

5. The motor vehicle according to claim 4, **characterized in that** said core (32) comprises at least one shaped plate (32b; 32c).

6. The motor vehicle according to claim 5, **characterized in that** said shaped plate (32b) comprises at least one separating and reinforcing portion (42), radially clamped between said intermediate portion (13a) and said half-shell (26b), and at least a U-shaped portion (44) fitted around said intermediate portion (13a) and having two arms (45) arranged on diametrically opposite parts of said intermediate portion (13a).

7. The motor vehicle according to claim 6, **characterized in that** said shaped sheet (32b) comprises a plurality of said separating and reinforcing portions (42) and a plurality of said U-shaped portions (44), axially alternating.

8. The motor vehicle according to claim 5, **characterized in that** said shaped plate (32c) has a C-shape defined by an intermediate wall (50) coupled to said half-shell (25, 26) and by two appendices (51), which radially protrude from opposite ends of said intermediate wall (50) and are coupled to said intermediate portion (13a).

9. The motor vehicle according to any one of claims 1 to 4, **characterized in that** said core (32) comprises at least one stiffening portion (36) having an alveolar and/or lamellar and/or porous structure.

10. The motor vehicle according to claim 9, **characterized in that** said core comprises two diametrically opposite bodies (33; 33a) housed in respective half-shells defining said ca sing (23).

11. The motor vehicle according to claim 10, **characterized in that** said connecting means comprise tie rods or bolts passing through said bodies, said half-shells and said intermediate portion (13a).

12. The motor vehicle according to any one of the preceding claims, **characterized by** further comprising:
- a steering column (17), and
- a support structure (18), which supports said steering column (17) and is coupled to said support crosspiece (7) near said stiffening structure (21).

13. The motor vehicle according to claim 12, **characterized in that** said support structure (18) is coupled to said intermediate portion (13a) through said stiffening structure (21).

## Patentansprüche

1. Kraftfahrzeug (1), das ein Tragquerstrebe (7) umfasst, die einen Träger (10) und eine Versteifungsstruktur (21), die an einen Zwischenabschnitt des Trägers (10) gekoppelt ist, umfasst; wobei der Zwischenabschnitt entlang einer Achse (24) verläuft und die Versteifungsstruktur (21) Folgendes umfasst:
- ein Gehäuse (23), das den Zwischenabschnitt (13a) mindestens teilweise umgibt;
- einen Kern (32), der radial zwischen dem Zwischenabschnitt (13a) und dem Gehäuse (23) angeordnet ist; und
- Verbindungsmittel, die das Gehäuse und den Kern an festen Positionen in Bezug auf den Zwischenabschnitt (13a) halten;
**dadurch gekennzeichnet, dass** die Versteifungsstruktur (21) Dämpfungselemente umfasst, die aus einem schwingungsdämpfenden Material hergestellt sind und in Kopplungszonen zwischen dem Kern (32) und dem Gehäuse (23) und/oder in Kopplungszonen zwischen dem Kern (32) und dem Zwischenabschnitt (13a) angeordnet sind.

2. Kraftfahrzeug nach einem der vorhergehenden Ansprüche, **dadurch gekennzeichnet, dass** das Gehäuse (23) den Zwischenabschnitt (13a) vollständig umgibt.

3. Kraftfahrzeug nach einem der vorhergehenden Ansprüche, **dadurch gekennzeichnet, dass** das Gehäuse (23) vom Zwischenabschnitt (13a) radial beabstandet ist.

4. Kraftfahrzeug nach Anspruch 3, **dadurch gekennzeichnet, dass** das Gehäuse (23) mindestens eine Halbschale (25, 26; 25a, 26a; 26b) umfasst, deren Konkavität radial zum Zwischenabschnitt orientiert ist, derart, dass sie einen Hohlraum (27) definiert, der den Kern (32) mindestens teilweise aufnimmt und von dem Zwischenabschnitt (13a) axial durchquert wird.

5. Kraftfahrzeug nach Anspruch 4, **dadurch gekennzeichnet, dass** der Kern (32) mindestens eine geformte Platte (32b; 32c) umfasst.

6. Kraftfahrzeug nach Anspruch 5, **dadurch gekennzeichnet, dass** die geformte Platte (32b) mindestens einen Trenn- und Verstärkungsabschnitt (42), der zwischen dem Zwischenabschnitt (13a) und der Halbschale (26b) radial eingeklemmt ist, und mindestens einen U-förmigen Abschnitt (44), der um den Zwischenabschnitt (13a) angebracht ist und zwei Schenkel (45) aufweist, die an diametral gegenüberliegenden Teilen des Zwischenabschnitts (13a) angeordnet sind, umfasst.

7. Kraftfahrzeug nach Anspruch 6, **dadurch gekennzeichnet, dass** das geformte Blech (32b) axial abwechselnd mehrere Trenn- und Verstärkungsabschnitte (42) und mehrere U-förmige Abschnitte (44) umfasst.

8. Kraftfahrzeug nach Anspruch 5, **dadurch gekennzeichnet, dass** die geformte Platte (32c) eine C-Form aufweist, die durch eine Zwischenwand (50), die an die Halbschale (25, 26) gekoppelt ist, und durch zwei Fortsätze (51), die von gegenüberliegenden Enden der Zwischenwand (50) radial vorstehen und an die Zwischenabschnitt (13a) gekoppelt sind, definiert ist.

9. Kraftfahrzeug nach einem der Ansprüche 1 bis 4, **dadurch gekennzeichnet, dass** der Kern (32) mindestens einen Versteifungsabschnitt (36) umfasst, der eine wabenförmige und/oder lamellenförmige und/oder poröse Struktur aufweist.

10. Kraftfahrzeug nach Anspruch 9, **dadurch gekennzeichnet, dass** der Kern zwei diametral gegenüberliegende Körper (33; 33a) umfasst, die in jeweiligen Halbschalen, die das Gehäuse (23) definieren, untergebracht sind.

11. Kraftfahrzeug nach Anspruch 10, **dadurch gekennzeichnet, dass** die Verbindungsmittel Zugstangen oder Bolzen umfassen, die die Körper, die Halbschalen und den Zwischenabschnitt (13a) durchlaufen.

12. Kraftfahrzeug nach einem der vorhergehenden Ansprüche, ferner **gekennzeichnet durch**:
- eine Lenksäule (17) und
- eine Tragstruktur (18), die die Lenksäule (17) trägt und in der Nähe der Versteifungsstruktur (21) an die Tragquerstrebe (7) gekoppelt ist.

13. Kraftfahrzeug nach Anspruch 12, **dadurch gekennzeichnet, dass** die Tragstruktur (18) über die Versteifungsstruktur (21) an den Zwischenabschnitt (13a) gekoppelt ist.

## Revendications

1. Véhicule à moteur (1) comprenant une traverse de support (7), qui comprend une poutre (10) et une structure de raidissement (21) couplée à une portion intermédiaire de ladite poutre (10) ; ladite portion intermédiaire s'étendant le long d'un axe (24) ; ladite structure de raidissement (21) comprenant :
- un boîtier (23), qui entoure au moins partiellement ladite portion intermédiaire (13a) ;
- un noyau (32), agencé radialement entre ladite portion intermédiaire (13a) et ledit boîtier (23) ;
- des moyens de raccordement maintenant ledit boîtier et ledit noyau à des positions fixes par rapport à ladite portion intermédiaire (13a) ;
**caractérisé en ce que** ladite structure de raidissement (21) comprend des éléments d'amortissement, constitués d'un matériau d'amortissement de vibration, agencés en des zones de couplage entre ledit noyau (32) et ledit boîtier (23) et/ou en des zones de couplage entre ledit noyau (32) et ladite portion intermédiaire (13a).

2. Véhicule à moteur selon l'une quelconque des revendications précédentes, **caractérisé en ce que** ledit boîtier (23) entoure complètement ladite portion intermédiaire (13a).

3. Véhicule à moteur selon l'une quelconque des revendications précédentes, **caractérisé en ce que** ledit boîtier (23) est espacé radialement de ladite portion intermédiaire (13a).

4. Véhicule à moteur selon la revendication 3, **caractérisé en ce que** ledit boîtier (23) comprend au moins une demi-coque (25, 26 ; 25a, 26a ; 26b) dont une concavité est orientée radialement vers ladite portion intermédiaire de manière à définir une cavité (27), qui loge au moins partiellement ledit noyau (32) et est traversée axialement par ladite portion intermédiaire (13a).

5. Véhicule à moteur selon la revendication 4, **caractérisé en ce que** ledit noyau (32) comprend au moins une plaque façonnée (32b ; 32c).

6. Véhicule à moteur selon la revendication 5, **caractérisé en ce que** ladite plaque façonnée (32b) comprend au moins une portion de séparation et de renfort (42), serrée radialement entre ladite portion intermédiaire (13a) et ladite demi-coque (26b), et au moins une portion en forme de U (44) ajustée autour de ladite portion intermédiaire (13a) et ayant deux bras (45) agencés sur des parties diamétralement opposées de ladite portion intermédiaire (13a).

7. Véhicule à moteur selon la revendication 6, **caractérisé en ce que** ladite feuille façonnée (32b) comprend une pluralité desdites portions de séparation et de renfort (42) et une pluralité desdites portions en forme de U (44), en alternance axialement.

8. Véhicule à moteur selon la revendication 5, **caractérisé en ce que** ladite plaque façonnée (32c) a une forme de C définie par une paroi intermédiaire (50) couplée à ladite demi-coque (25, 26) et par deux appendices (51), qui font saillie radialement depuis des extrémités opposées de ladite paroi intermédiaire (50) et sont couplés à ladite portion intermédiaire (13a).

9. Véhicule à moteur selon l'une quelconque des revendications 1 à 4, **caractérisé en ce que** ledit noyau (32) comprend au moins une portion de raidissement (36) ayant une structure alvéolaire et/ou lamellaire et/ou poreuse.

10. Véhicule à moteur selon la revendication 9, **caractérisé en ce que** ledit noyau comprend deux corps diamétralement opposés (33 ; 33a) logés dans des demi-coques respectives définissant ledit boîtier (23).

11. Véhicule à moteur selon la revendication 10, **caractérisé en ce que** lesdits moyens de raccordement comprennent des tiges ou boulons de liaison passant à travers lesdits corps, lesdites demi-coques et ladite portion intermédiaire (13a).

12. Véhicule à moteur selon l'une quelconque des revendications précédentes, **caractérisé en ce qu'**il comprend en outre :
- une colonne de direction (17), et
- une structure de support (18), qui supporte ladite colonne de direction (17) et est couplée à ladite traverse de support (7) à proximité de ladite structure de raidissement (21).

13. Véhicule à moteur selon la revendication 12, **caractérisé en ce que** ladite structure de support (18) est couplée à ladite portion intermédiaire (13a) à travers ladite structure de raidissement (21).
